# EUROPEAN PATENT SPECIFICATION

(11) **EP 3 190 644 B1**
(45) Date of publication and mention of the grant of the patent: **01.04.2020**
(21) Application number: 14859285.0
(22) Date of filing: 05.11.2014
(51) Int. Cl.: H01M 2/26, H01M 2/30, H01M 4/66

(54) **LEAD TAB OF FIBROUS SECONDARY BATTERY**
FÜHRUNGSLASCHE EINER FASERIGEN SEKUNDÄRBATTERIE
PATTE DE BROCHE DE CONNEXION DE BATTERIE SECONDAIRE FIBREUSE

(30) Priority: 03.09.2014 KR 20140117206
(43) Date of publication of application: 12.07.2017
(73) Proprietor: Routejade Inc., Chungcheongnam-do 320-844 (KR)
(72) Inventor: KIM, Kyung Joon, Daejeon 305-794 (KR); KIM, In Joong, Nonsan-si Chungcheongnam-do 320-030 (KR); CHOI, Seung Ho, Daejeon 305-315 (KR)
(74) Representative: dompatent von Kreisler Selting Werner - Partnerschaft von Patent- und Rechtsanwälten mbB
(86) International application number: PCT/KR2014/010558
(87) International publication number: WO 2016/035928

(56) References cited:
- GB-A- 2 200 068
- JP-A- H09 213 300
- JP-A- H11 329 451
- JP-A- 2008 536 267
- JP-A- 2013 004 179
- JP-A- 2013 089 465
- US-A1- 2006 093 909

## Description

### [Technical Field]

The present invention relates to a fibrous secondary battery, and more particularly, to a lead tab of a fibrous secondary battery which has a fibrous electrode woven with a fiber such as a conductive fiber.

### [Background Art]

Enlarging and varying of the market of portable electronic devices such as a mobile phone, a camcorder, and a notebook have increased the demand on rechargeable secondary batteries for supplying power. As portable devices have been downsized, decreased in weight, improved in performance, and varied in function, it is been required to improve the storage density of secondary batteries used for powers.

Further, as electronic devices are rapidly decreased in thickness and downsized, the demand on a thin secondary battery is also rapidly increased, but using the existing method of assembling a circular or a polygonal secondary battery considerably decreases energy density per unit volume due to thinning. Accordingly, it is necessary to develop a secondary battery having high energy density per unit volume in order to downsize various portable electronics and decrease the weight and thickness of them.

In particular, many curved portable electronics have been released and portable electronics that are curved and flexible have been developed in recent years, so there is a need for developing a secondary battery that can be curved or curvedly deformed. Accordingly, there are a lot of studies about a fibrous secondary battery made of fibers that are electrically conductive such as a conductive fiber.

Such a fibrous secondary battery is very flexible in shape, unlike a metallic secondary battery manufactured in the shape of a plate, so it is very useful for portable electronics that can deform curvedly or complicated shapes.

However, the lead tab of a fibrous secondary battery is also made of a thin conductive fiber, so it is difficult to firmly connect an external terminal to the lead tab, and accordingly, the fibrous secondary battery cannot efficiently transmit energy to the external terminal.

That is, it is preferable that the lead tab of a secondary battery which is connected to an external terminal of an electronic device is connected to the external terminal, keeping large rigidity, in respect of connecting ability; however, since the lead tab of the fibrous secondary battery is made of a thin conductive fiber to easily deform, its rigidity is small and it cannot be firmly connected with an external terminal.

Accordingly, the applicant(s) has made the present invention to solve these problems, and as one of the prior art, there is Korean Patent Application Publication No. 10-2013-0081501, titled "Preparation method of fibrous solar cells, and the fibrous solar cells thereby".

GB 2 200 068 A and US 2006/0093909 A1 disclose fibrous secondary batteries according to the preamble of claim 1.

### [Disclosure]

### [Technical Problem]

The present invention has been made in an effort to solve the problems and provides a fibrous secondary battery which can be firmly connected with an external terminal of an electronic device without a drop in energy transmission efficiency, by providing a lead tab that can be physically connected with a connecting fiber the same in material as a conductive fiber for forming a fibrous electrode or with a fibrous electrode by a conductive fiber.

### [Technical Solution]

A fibrous secondary battery according to the invention is defined in claim 1. A fibrous secondary battery according to an aspect of the present invention includes: a fibrous electrode made by conductive fibers; and a lead tab connected with the fibrous electrode, in which the lead tab is connected with the fibrous electrode by connecting fibers that are the same materials as the conductive fibers of the fibrous electrode.

Further, a fibrous secondary battery according to another aspect of the present invention includes: a fibrous electrode made by conductive fibers; and a lead tab connected with the fibrous electrode, in which the lead tab is connected with the fibrous electrode by the conductive fibers of the fibrous electrode.

Further, the lead tab according to the present invention has: a connecting portion connected with the fibrous electrode; and a protruding portion protruding from the connecting portion and connected with an external terminal of an electronic device.

Further, the connecting portion of the lead tab is wound around the connecting fibers or the conductive fibers of the fibrous electrode and connected with the fibrous electrode.

Further, a plurality of fastening holes in which the connecting fibers or the conductive fibers of the fibrous electrode are inserted may be formed at the connecting portion.

Further, a pair of guide grooves allowing the connecting fibers to be wound around a lateral center of the connecting portion may be formed at the connecting portion, and the guide grooves may define U-shaped spaces by being formed longitudinally along the connecting portion at both sides of the connecting portion.

Further, the fibrous electrode may have: a receiving portion in which the connecting portion of the lead tab is inserted; and a gap that communicates with the receiving portion and in which the protruding portion of the lead tab is inserted.

Further, the connecting portion of the lead tab may be wound with conductive fibers in a space defined by the receiving portion and may be connected with the fibrous electrode.

Further, a cover made of the same material as the conductive fibers of the fibrous electrode may be disposed over the fibrous electrode and the connecting portion of the lead tab, and the cover may be connected with the conductive fibers of the fibrous electrode and covers the connecting portion of the lead tab.

Further, the lead tab may include a polymer or an adhesive that is applied or coated on connection portions of the lead tab and the fibrous electrode.

### [Advantageous Effects]

According to a fibrous secondary battery of the present invention, since a lead tab having predetermined strength can be physically connected with a fibrous electrode by conductive connecting fibers or conductive fibers of the fibrous electrode, an external terminal of an electronic device can be more firmly connected to the fibrous electrode by the lead tab, so energy transmission efficiency is not decreased.

Further, according to the fibrous secondary battery of the present invention, high current density and energy density per unit volume can be achieved, as compared with secondary battery having predetermined shapes, so it is suitable for electronic devices that are curved or can curvedly deform.

### [Description of Drawings]

FIG. 1 is a perspective view illustrating a lead tab of a fibrous secondary battery according to a first embodiment of the present invention.
FIG. 2 is a plan view of the fibrous secondary battery illustrated in FIG. 1.
FIG. 3 is a plan view illustrating another embodiment with a connecting fiber inserted in a fastening hole illustrated in FIG. 2.
FIG. 4 is a perspective view illustrating a lead tab of a fibrous secondary battery according to a second embodiment of the present invention.
FIG. 5 is a plan view of the fibrous secondary battery illustrated in FIG. 4.
FIG. 6A is a plan view illustrating a lead tab of a fibrous secondary battery according to a third embodiment of the present invention.
FIG. 6B is a plan view illustrating a pair of conductive fibers that is connected to the lead tab of the fibrous secondary battery according to the third embodiment of the present invention.
FIG. 7 is a cross-sectional view taken along line A-A' illustrated in FIG. 6A.
FIG. 8 is a perspective view illustrating a cover according to an embodiment of the present invention connected to a fibrous electrode and covering a lead tab.

### [Best Mode]

Advantages and features of the present invention and methods for achieving them will become apparent from the descriptions of exemplary embodiments herein below with reference to the accompanying drawings.

However, the present invention is not limited to exemplary embodiments disclosed herein but may be implemented in various different forms. The exemplary embodiments are provided for making the disclosure of the present invention thorough and for fully conveying the scope of the present invention to those skilled in the art. It is to be noted that the scope of the present invention is defined only by the claims.

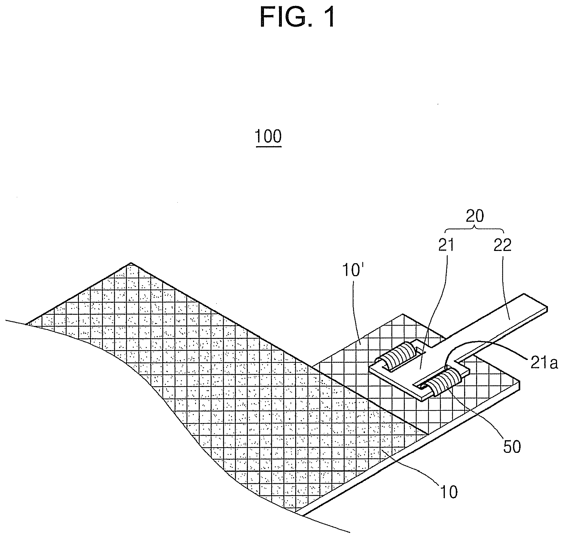

Hereinafter, a fibrous secondary battery according to embodiments of the present invention will be described in detail with reference to FIGS. 1 to 8. Well-known function or configuration will not be described in detail in the following description.

As illustrated in FIGS. 1 to 8, a lead tab 20 of a fibrous secondary battery 100 according to an embodiment of the present invention may include a fibrous electrode 10 made of conductive fibers and a lead tab 20 connected to the fibrous electrode 10.

Herein, the fibrous secondary battery 100, which is formed by weaving conductive fibers, has a meaning including a flexible battery with little limit in the shape.

The fibrous electrode 10 may be formed by weaving conductive fibers made of stainless steel, aluminum, nickel, titanium, copper or allows of them.

The conductive fiber used herein is a term that means a fiber or a thread that is electrically conductive. For example, the conductive fiber has a meaning that includes a material made by coating a fabric with metal. That is, although the term "conductive fiber" will be described herein for the convenience of description, it should be understood that the conductive fiber has a meaning including a fiber.

The fibrous electrode 10 is formed by continuously arranging the conductive fibers at a predetermined thickness and the conductive fibers have thermal resistance, thermoplasticity, and electrical conductivity, which metals have, the processing of weaving and fabricating non-woven fabric that are specific processes applied to fibers can be performed on the conductive fibers. For reference, a method of manufacturing a fibrous electrode using the conductive fibers is easily achieved by those skilled in the art, so it is not described herein to avoiding making the aspect of the present invention unclear.

And the fibrous electrode 10 is coated or impregnated with an electrical active material and may be formed in various sizes and shapes to fit the size and capacity of a secondary battery.

Meanwhile, in the fibers constituting of the fibrous electrode 10, some can be conductive fibers by being coated or impregnated with an electrical active material, while some are not coated with an electrically active material. That is, the fibrous electrode 10 may include a portion including an electrode a material and a portion not including an electrode material.

The lead tab 20 should be connected to the portion including an electrode material in the fibrous electrode 10.

The lead tab 20 is made of conductive metal, and as illustrated in FIGS. 1 to 5, it can be physically connected with the fibrous electrode 10 through connecting fibers 50 the same in material and shape as the conductive fibers of the fibrous electrode 10.

For reference, in an embodiment of the present invention, the lead tab 20 is connected to a portion 10a not coated with an electrically active material in the fibrous electrode 10 through the connecting fibers 50 in the drawings, but it is not limited thereto. That is, the lead tab 20 may be connected to a region coated with an electrical active material of the fibrous electrode 10.

And the lead tab 20 may have a connecting portion 21 connected with the fibrous electrode 10 and a protruding portion 22 protruding and extending from the connecting portion 21 and connected with an external terminal of an electronic device receiving power from the fibrous secondary battery 100.

The width of the connecting portion 21 may be the same as or larger than that of the protruding portion 22. For reference, in an embodiment of the present invention, the connecting portion 21 is larger in width than the protruding portion 22.

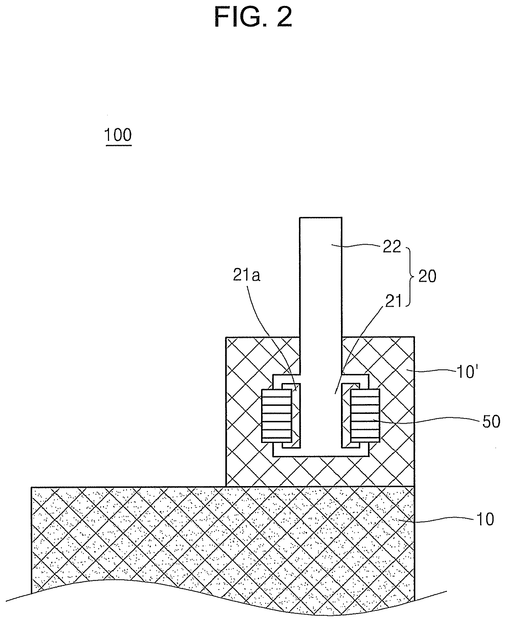

As illustrated in FIGS. 1 and 2, a pair of fastening holes 21a for fastening both lateral ends of the connecting portion 21 to the fibrous electrode 10 through the connecting fibers 50 may be formed at the connecting portion 21.

The fastening holes 21a define spaces for the connecting fibers 50 to be able to wind a portion of the connecting portion 21 of the lead tab 20. That is, one end of the connecting fibers 50 may be connected with the conductive fibers of the fibrous electrode 10 and the other end may be connected with the conductive fibers of the fibrous electrode 10, surrounding the portions of the connecting portion 21 which define the fastening holes 21a.

Accordingly, the lead tab 20 can be firmly combined with the fibrous electrode 10 by the connecting fibers 50 and the fastening holes 21a.

The connecting fibers 50 may be connected by sewing the lead tab 20 to the fibrous electrode 10, in which the connecting fibers may be called threads or sewing threads for sewing.

For reference, in an embodiment of the present invention, although the pair of fastening holes 21a having a rectangular shape are formed at a predetermined distance from each other in the connecting portion 21, but the present invention is not limited thereto. That is, the fastening holes 21a may be formed in the shape of a circle or a polygon may be formed at various positions in various numbers in the connecting portion 21.

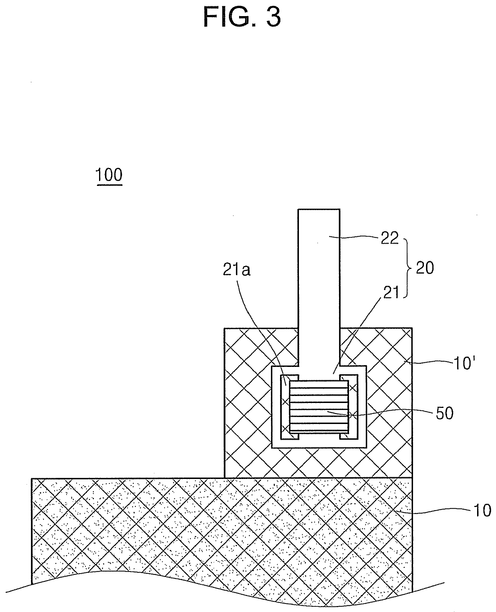

And in an embodiment of the present invention, one end of the connecting fiber 50 is connected with the conductive fiber of the fibrous electrode 10 outside the fastening holes 21a and the other end of the connecting fiber 50 is connected with the conductive fiber of the fibrous electrode 10 inside the space defined by the fastening holes 21a, but the present invention is not limited thereto, and as illustrated in FIG. 3, both ends of the connecting fibers 50 may be inserted in the space defined by the pair of fastening holes 21a respectively, so the conductive fibers of the fibrous electrode 10 and the lead tab 20 may be connected.

Herein, when one end of the connecting fiber 50 is connected with the conductive fibers of the fibrous electrode 10 outside the fastening holes 21a and the other end of the connecting fiber 50 is connected with the conductive fibers of the fibrous electrode 10 inside the space defined by the fastening holes 21a, both lateral ends of the connecting portion 21 may be fastened to the fibrous electrode 10.

And when both ends of the connecting fiber 50 are inserted in the space defined by the pair of fastening holes 21a respectively, and connected with the conductive fibers of the fibrous electrode 10, the lateral middle portion of the connecting portion 21 may be fastened to the fibrous electrode 10.

The way of fastening the connecting portion 21 to the fibrous electrode 10, using the fastening holes 21a and the connecting fibers 50 may be selectively used, depending on the shape or the size of the fibrous electrode 10 and the lead tab 20, but it may be most preferable to apply all of the two examples in order to stably fasten the connecting portion 21 of the lead tab 20 to the fibrous electrode 10.

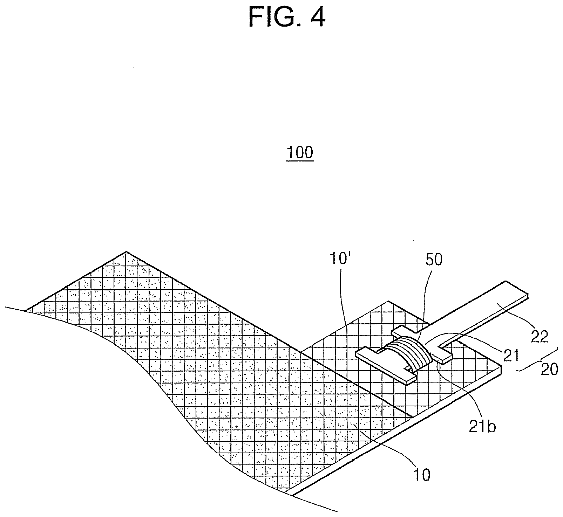

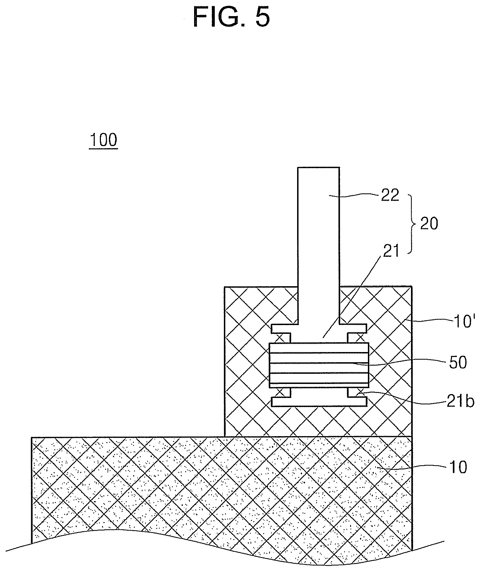

As illustrated in FIGS. 4 and 5, a pair of guide grooves 21b may be formed at the connecting portion 21 so that the connecting fibers 50 can be wound around the lateral center of the connecting portion 21 of the lead tab 20.

The pair of guide grooves 21b is formed longitudinally along the connecting portion 21, at both lateral sides of the connecting portion 21, and may form U-shaped spaces which both ends of the connecting fibers 50 can be inserted.

The guide grooves 21b have a shape capable of exposing both ends of the connecting fibers 50 connected with the conductive fibers of the fibrous electrode 10 to the outside, so a worker can easily connect both ends of the connecting fibers 50 to the conductive fibers of the fibrous electrode 10. That is, the guide grooves 21b have a shape open to the lateral outside of the connecting portion 21, so a worker can easily connect both ends of the connecting fibers 50 to the conductive fibers of the fibrous electrode 10.

According to this configuration, the lead tab 20 can be firmly fastened to the fibrous electrode 10 by the connecting fibers 50 and can stably absorb electrode ions from the fibrous electrode 10 through the connecting fibers 50.

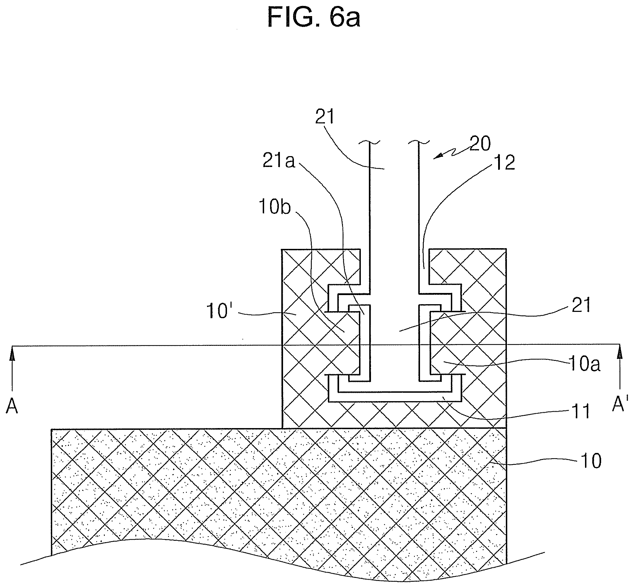

As illustrated in FIG. 6A, the fibrous electrode 10 may have a receiving portion 11 in which the connecting portion 21 of the lead tab 20 is inserted and a gap 21 that communicates with the receiving portion 11 and in which the protruding portion 22 of the lead tab 20 is inserted.

The receiving portion 11 and the gap 12 have shapes corresponding to the connecting portion 21 and the protruding portion 22, respectively, and are larger than the areas defined by the connecting portion 21 and the protruding portion 22.

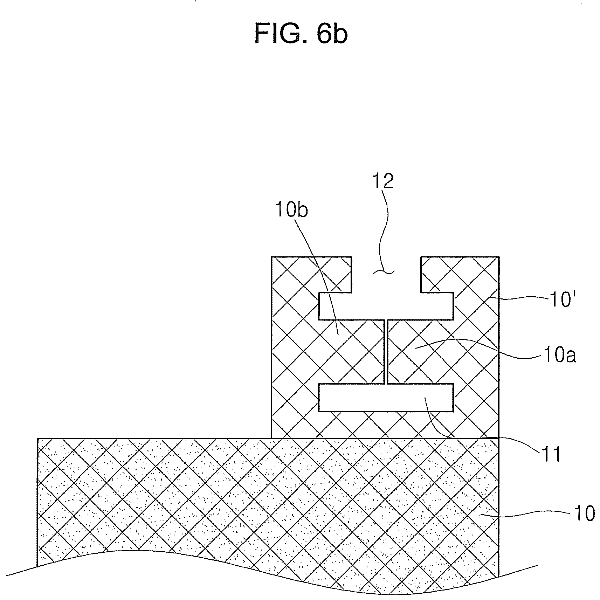

Herein, the connecting portion 21 of the lead tab 20 which is inserted in the receiving portion 11 may be connected with the fibrous electrode 10 through a pair of conductive fibers 10a and 10b protruding to the space defined by the receiving portion 11, as illustrated in FIG. 6B.

It is preferable that a pair of fastening holes 21a in which the conductive fibers 10a and 10b can be inserted is formed at the lead tab 20.

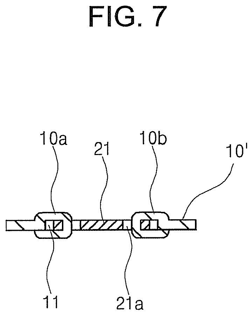

That is, as illustrated in FIG. 7, one end of the conductive fibers 10a and 10b may be connected to the fibrous electrode 10 forming the receiving portion 11 and the other end may be connected to the bottom of the fibrous electrode 10 through the fastening holes 21a.

In this configuration, the connecting portion 21 of the lead tab 20 may be connected to the fibrous electrode by the conductive fibers 10 of the fibrous electrode 10.

Herein, in order to connect the connecting portion 21 inserted in the receiving portion 11 to the conductive fibers of the fibrous electrode 10, it is preferable that the pair of conductive fibers 10a and 10b that can be inserted in the fastening holes 21a of the connecting portion can be disposed in the space defined by the receiving portion when the fibrous electrode 10 is partially cut to form the receiving portion 11.

According to this configuration, the fibrous electrode 10 and the lead tab 20 can be fastened to each other without using the specific connecting fibers 50, so the manufacturing cost can be reduced. Further, the lead tab 20 can directly absorb electrode ions from the fibrous electrode, so energy efficiency can be increased.

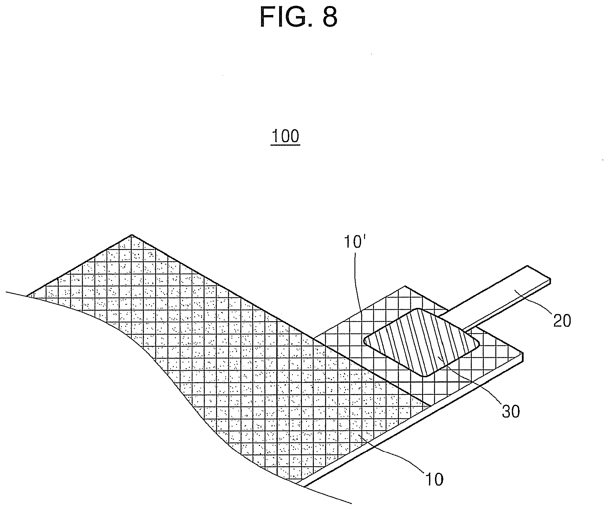

And a cover 30 may be disposed over the connecting portion of the lead tab 20 connected with the fibrous electrode 10, as illustrated in FIG. 8.

The cover 30 is made of the same material as the conductive fibers of the fibrous electrode and may have size capable of covering the connecting portion 21 of the lead tab 20.

The cover 30 may be connected with the conductive fibers of the fibrous electrode 10, covering the connecting portion 21 connected with the fibrous electrode 10 by the connecting fibers 50 or the conductive fibers 10a and 10b.

Accordingly, the connecting portion 21 can be firmly fastened to the fibrous electrode 10 by the cover 30 and can stably absorb electrode ions from the fibrous electrode 10.

Meanwhile, the lead tab 20 of a fibrous secondary battery according to an embodiment of the present invention can be applied or coated with a polymer or an adhesive such as bond at the sewn portions, when it is fastened to the fibrous electrode by sewing with the connecting fibers 50. As described above, by applying or coating a polymer or an adhesive on the sewn portions of the lead tab 20, the fibrous electrode 10, and the connecting fibers 50 or the connecting portions of the lead tab 20 and the fibrous electrode 10, fastening the lead tab 20 to the fibrous electrode 10 can be enhanced. Since a polymer or an adhesive is applied or coated, the lead tab 20 and the fibrous electrode 10 can keep connected, even if the connecting fibers 50 on the sewn portions are cut or the fibrous electrode 10 tears.

Although detailed embodiments of the present invention were described above, it should be understood that the present invention may be modified in various ways without departing from the scope of the present invention. Therefore, the scope of the present invention should not be limited to the embodiments and should be only defined by the claims.

## Claims

1. A fibrous secondary battery (100), comprising:
a fibrous electrode (10) made by conductive fibers; and
a lead tab (20) connected with the fibrous electrode (10),
wherein the lead tab (20) is connected with the fibrous electrode (10) by connecting fibers (50) that are the same materials as the conductive fibers (10a, 10b) of the fibrous electrode (10) or by the conductive fibers (10a, 10b) of the fibrous electrode (10), wherein the lead tab (20) has a connecting portion (21) and a protruding portion (22) protruding from the connecting portion (21), **characterized in that**
the connecting fibers (50) or the conductive fibers (10a, 10b) of the fibrous electrode (10) are wound around the connecting portion (21) of the lead tab (20) and the connecting portion (21) of the lead tab (20) is connected with the fibrous electrode (10).

2. The fibrous secondary battery (100) of claim 1, wherein a plurality of fastening holes (21a) in which the connecting fibers (50) or the conductive fibers (10a, 10b) of the fibrous electrode (10) are inserted is formed at the connecting portion (21).

3. The fibrous secondary battery (100) of claim 1, wherein a pair of guide grooves (21b) allowing the connecting fibers (50) to be wound around a lateral center of the connecting portion (21) is formed at the connecting portion (21), and
the guide grooves (21b) define U-shaped spaces by being formed longitudinally along the connecting portion (21) at both sides of the connecting portion (21).

4. The fibrous secondary battery (100) of claim 1, wherein the fibrous electrode (10) has:
a receiving portion (11) in which the connecting portion (21) of the lead tab (20) is inserted; and
a gap (12) that communicates with the receiving portion (11) and in which the protruding portion (22) of the lead tab (20) is inserted.

5. The fibrous secondary battery (100) of claim 4, wherein the connecting portion (21) of the lead tab (20) is wound with conductive fibers (10a, 10b) in a space defined by the receiving portion (11) and is connected with the fibrous electrode (10)

6. The fibrous secondary battery (100) of claim 1, wherein a cover (30) made of the same material as the conductive fibers (10a, 10b) of the fibrous electrode (10) is disposed over the fibrous electrode (10) and the connecting portion (21) of the lead tab (20), and
the cover (30) is connected with the conductive fibers (10a, 10b) of the fibrous electrode (10) and covers the connecting portion (21) of the lead tab (20).

7. The fibrous secondary battery (100) of claim 1, comprising a polymer or an adhesive that is applied or coated on connecting portions (21) of the lead tab (20) and the fibrous electrode (10).

## Patentansprüche

1. Faser-Sekundärbatterie (100), die aufweist:
eine Faserelektrode (10) aus leitenden Fasern; und
eine Anschlusslasche (20), die mit der Faserelektrode (10) verbunden ist,
wobei die Anschlusslasche (20) mit der Faserelektrode (10) verbunden ist mittels Verbindungsfasern (50), die aus dem gleichen Material sind wie die leitenden Fasern (10a, 10b) der Faserelektrode (10), oder mittels der leitenden Fasern (10a, 10b) der Faserelektrode (10), wobei die Anschlusslasche (20) einen Verbindungsabschnitt (21) und einen Vorsprungabschnitt (22), der von dem Verbindungsabschnitt (21) vorsteht, aufweist,
**dadurch gekennzeichnet, dass**
die Verbindungsfasern (50) oder die leitenden Fasern (10a, 10b) der Faserelektrode (10) um den Verbindungsabschnitt (21) der Anschlusslasche (20) gewickelt sind und der Verbindungsabschnitt (21) der Anschlusslasche (20) mit der Faserelektrode (10) verbunden ist.

2. Faser-Sekundärbatterie (100) nach Anspruch 1, bei der eine Vielzahl von Befestigungslöchern (21a), in die die Verbindungsfasern (50) oder die leitenden Fasern (10a, 10b) der Faserelektrode (10) eingesetzt sind, an dem Verbindungsabschnitt (21) ausgebildet ist.

3. Faser-Sekundärbatterie (100) nach Anspruch 1, bei der ein Paar von Führungsnuten (21b), die ermöglichen, dass die Verbindungsfasern (50) um eine laterale Mitte des Verbindungsabschnitts (21) gewickelt werden, an dem Verbindungsabschnitt (21) ausgebildet sind, und
die Führungsnuten (21b) dadurch, dass sie in der Längsrichtung entlang des Verbindungsabschnitts (21) auf beiden Seiten des Verbindungsabschnitts (21) ausgebildet sind, U-förmige Räume definieren.

4. Faser-Sekundärbatterie (100) nach Anspruch 1, bei der die Faserelektrode (10) aufweist:
einen Aufnahmeabschnitt (11), in den der Verbindungsabschnitt (21) der Anschlusslasche (20) eingesetzt ist; und
einen Spalt (12), der mit dem Aufnahmeabschnitt (11) kommuniziert und in den der Vorsprungabschnitt (22) der Anschlusslasche (20) eingesetzt ist.

5. Faser-Sekundärbatterie (100) nach Anspruch 4, bei der der Verbindungsabschnitt (21) der Anschlusslasche (20) in einem Raum, der von dem Aufnahmeabschnitt (11) definiert ist, mit leitenden Fasern (10a, 10b) umwickelt ist und mit der Faserelektrode (10) verbunden ist.

6. Faser-Sekundärbatterie (100) nach Anspruch 1, bei der eine Abdeckung (30) aus dem gleichen Material wie dem der leitenden Fasern (10a, 10b) der Faserelektrode (10) über der Faserelektrode (10) und dem Verbindungsabschnitt (21) der Anschlusslasche (20) angeordnet ist, und
die Abdeckung (30) mit den leitenden Fasern (10a, 10b) der Faserelektrode (10) verbunden ist und den Verbindungsabschnitt (21) der Anschlusslasche (20) abdeckt.

7. Faser-Sekundärbatterie (100) nach Anspruch 1, die ein Polymer oder einen Kleber aufweist, das/der auf den Verbindungsabschnitt (21) der Anschlusslasche (20) und die Faserelektrode (10) aufgebracht oder auftragen ist.

## Revendications

1. Batterie secondaire fibreuse (100), comprenant :
une électrode fibreuse (10) constituée par des fibres conductrices ; et
une patte de connecteur (20) connectée à l'électrode fibreuse (10),
dans laquelle la patte de connecteur (20) est connectée à l'électrode fibreuse (10) par des fibres de connexion (50) qui sont les mêmes matériaux que les fibres conductrices (10a, 10b) de l'électrode fibreuse (10) ou par des fibres conductrices (10a, 10b) de l'électrode fibreuse (10), dans laquelle la patte de connecteur (20) possède une portion de connexion (21) et une portion de saillie (22) faisant saillie depuis la portion de connexion (21),
**caractérisée en ce que**
les fibres de connexion (50) ou les fibres conductrices (10a, 10b) de l'électrode fibreuse (10) sont enroulées autour de la portion de connexion (21) de la patte de connecteur (20) et la portion de connexion (21) de la patte de connecteur (20) est connectée à l'électrode fibreuse (10).

2. Batterie secondaire fibreuse (100) selon la revendication 1, dans laquelle une pluralité de trous de fixation (21a) dans lesquels les fibres de connexion (50) ou les fibres conductrices (10a, 10b) de l'électrode fibreuse (10) sont insérées est formée au niveau de la portion de connexion (21).

3. Batterie secondaire fibreuse (100) selon la revendication 1, dans laquelle une paire de rainures de guidage (21b) permettant d'enrouler les fibres de connexion (50) autour d'un centre latéral de la portion de connexion (21) est formée au niveau de la portion de connexion (21), et
les rainures de guidage (21b) définissent des espaces en U en étant formées longitudinalement suivant la portion de connexion (21) au niveau des deux côtés de la portion de connexion (21).

4. Batterie secondaire fibreuse (100) selon la revendication 1, dans laquelle l'électrode fibreuse (10) possède :
une portion de réception (11) dans laquelle la portion de connexion (21) de la patte de connecteur (20) est insérée ; et
un écartement (12) qui communique avec la portion de réception (11) et dans lequel la portion de saillie (22) de la patte de connecteur (20) est insérée.

5. Batterie secondaire fibreuse (100) selon la revendication 4, dans laquelle la portion de connexion (21) de la patte de connecteur (20) est enroulée avec des fibres conductrices (10a, 10b) dans un espace défini par la portion de réception (11) et est connectée à l'électrode fibreuse (10).

6. Batterie secondaire fibreuse (100) selon la revendication 1, dans laquelle un couvercle (30) constitué du même matériau que les fibres conductrices (10a, 10b) de l'électrode fibreuse (10) est disposé au-dessus de l'électrode fibreuse (10) et de la portion de connexion (21) de la patte de connecteur (20), et
le couvercle (30) est connecté aux fibres conductrices (10a, 10b) de l'électrode fibreuse (10) et couvre la portion de connexion (21) de la patte de connecteur (20).

7. Batterie secondaire fibreuse (100) selon la revendication 1, comprenant un polymère ou un adhésif qui est appliqué ou déposé sur des portions de connexion (21) de la patte de connecteur (20) et de l'électrode fibreuse (10).
